Europäisches Patentamt

European Patent Office

Office européen des brevets

(11) Numéro de publication: **0 240 434 B1**

# (12) FASCICULE DE BREVET EUROPEEN

(45) Date de publication de fascicule du brevet:
**04.09.91**

(51) Int. Cl.⁵: **H02H 7/122**, H02M 3/335

(21) Numéro de dépôt: **87400740.4**

(22) Date de dépôt: **03.04.87**

(54) Circuit de protection d'alimentation à découpage.

(30) Priorité: **04.04.86 FR 8604855**

(43) Date de publication de la demande:
**07.10.87 Bulletin 87/41**

(45) Mention de la délivrance du brevet:
**04.09.91 Bulletin 91/36**

(84) Etats contractants désignés:
**DE FR GB IT NL**

(56) Documents cités:
**US-A- 3 733 540**
**US-A- 4 288 831**
**US-A- 4 330 816**

**ELECTRONIC COMPONENTS AND APPLICA-
TIONS, vol. 2, no. 1, novembre 1979, pages
31-48, Eindhoven, NL; H. HOUKES: "TDA1060
- a comprehensive integrated control circuit
for SMPS"**

(73) Titulaire: **THOMSON-CSF
51, Esplanade du Général de Gaulle
F-92800 Puteaux(FR)**

(72) Inventeur: **Maige, Philippe
THOMSON-CSF SCPI 19, avenue de Messine
F-75008 Paris(FR)**

(74) Mandataire: **de Beaumont, Michel et al
1bis, rue Champollion
F-38000 Grenoble(FR)**

**Description**

La présente invention concerne les alimentations stabilisées dites alimentations à découpage.

Une alimentation à découpage fonctionne de la manière suivante : un enroulement primaire de transformateur reçoit un courant qui est par exemple issu d'un pont de redresseurs recevant l'énergie du réseau alternatif. Le courant dans le transformateur est haché par un commutateur (par exemple un transistor de puissance) placé en série avec l'enroulement primaire.

Un circuit de commande du transistor établit des créneaux périodiques de mise en conduction du transistor. Pendant la durée du créneau le passage du courant est autorisé ; en dehors du créneau, le passage du courant est interdit.

Sur un (ou plusieurs) enroulement secondaire du transformateur, on recueille alors une tension alternative. Celle-ci est redressée et filtrée pour aboutir à une tension continue qui est la tension continue de sortie de l'alimentation à découpage.

Pour stabiliser la valeur de cette tension continue, on agit sur le rapport cyclique de conduction périodique du commutateur, c'est-à-dire sur le rapport entre la durée de conduction et la durée de blocage dans une période de découpage.

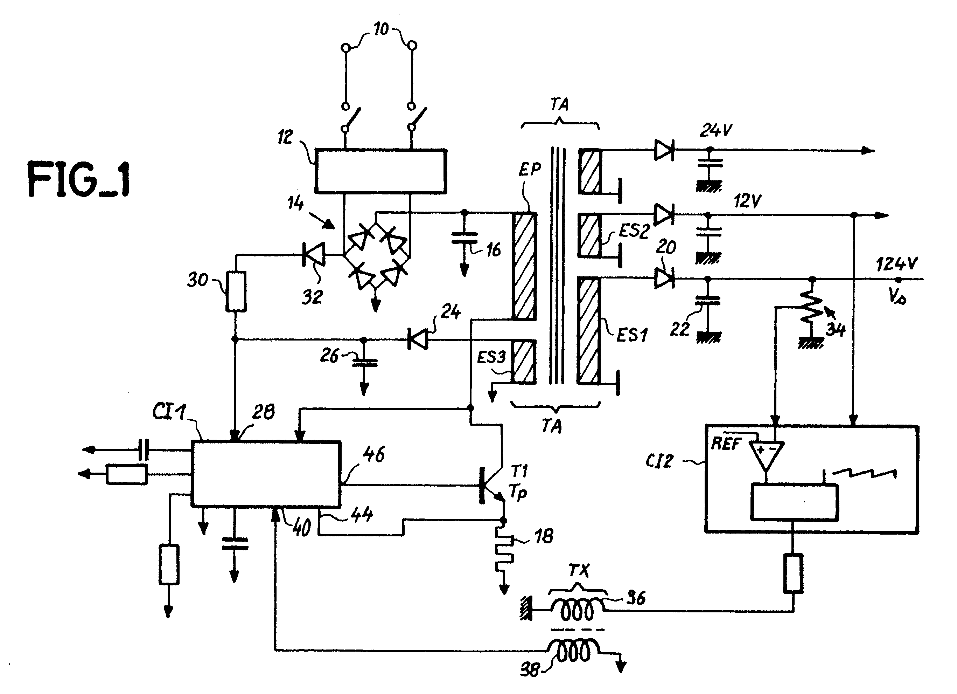

La figure 1 représente à titre d'exemple une architecture d'alimentation à découpage fabriquée par la Demanderesse dans laquelle deux circuits intégrés sont utilisés. L'un des circuits, CI1, sert à commander la base d'un transistor de puissance $T_P$ pour lui appliquer des signaux périodiques de commande de mise en conduction et de commande de blocage. Ce circuit de commande de base CI1 est placé du côté de l'enroulement primaire (EP) du transformateur (TA) pour des raisons que l'on comprendra mieux dans la suite de la description. L'autre circuit intégré, circuit de régulation CI2, est au contraire placé du côté du secondaire (enroulement ES1) et il sert à examiner la tension de sortie Vs de l'alimentation pour élaborer des signaux de régulation qu'il transmet au premier circuit intégré à travers un petit transformateur TX. Le premier circuit intégré CI1 utilise ces signaux de régulation pour modifier le rapport cyclique de mise en conduction du transistor de commutation $T_P$ et ainsi réguler la tension de sortie Vs de l'alimentation.

En figure 1, on a désigné la ligne du réseau public de distribution électrique par référence 10 (secteur à 110 ou 220 volts, 50 ou 60 hertz). Cette ligne est reliée à travers un filtre 12 à l'entrée d'un pont redresseur 14 dont la sortie est connectée d'une part à une masse électrique primaire, représentée partout par un triangle noir pointe en bas, et d'autre part à une extrémité de l'enroulement primaire EP du transformateur d'alimentation TA.

Un condensateur de filtrage 16 est placé en parallèle sur les sorties du pont redresseur 14. L'autre extrémité de l'enroulement primaire est reliée au collecteur d'un transistor de commutation $T_P$ dont l'émetteur est relié à la masse primaire par l'intermédiaire d'une petite résistance 18 de mesure de courant.

Le transformateur possède plusieurs enroulements secondaires qui sont de préférence isolés galvaniquement du secteur et reliés par exemple à une masse électrique secondaire isolée galvaniquement de la masse primaire.

Ici, chacun des enroulements secondaires a une extrémité reliée à la masse secondaire. L'autre extrémité alimente un condensateur de filtrage passe-bas respectif par l'intermédiaire d'une diode de redressement respective.

On s'intéressera dans la suite à un seul enroulement secondaire ES1, relié par une diode 20 à un condensateur 22. La tension de sortie continue de l'alimentation à découpage est la tension Vs aux bornes du condensateur 22 ; mais bien entendu d'autres tensions continues de sortie peuvent être obtenues aux bornes des autres condensateurs de filtrage reliés aux enroulements secondaires. Ces tensions de sortie constituent des tensions d'alimentation stabilisées pour des circuits d'utilisation non représentés. A titre d'exemple, un enroulement secondaire ES2 fournit une tension d'alimentation stabilisée de quelques volts pour le circuit intégré de régulation CI2 dont on a déjà parlé. On vérifie donc à ce propos que ce circuit n'est pas alimenté et ne peut donc pas fournir de signaux tant que l'alimentation à découpage ne fonctionne pas.

Il en est de même a priori pour le circuit intégré CI1 de commande de base du transistor de puissance $T_P$, circuit qui est alimenté par une tension stabilisée fournie à partir d'un enroulement secondaire ES3, d'une diode 24 et d'un condensateur 26 (on remarquera en passant que cet enroulement, bien qu'étant un enroulement secondaire est relié à la masse primaire et non à la masse secondaire, ceci pour la raison bien simple que le circuit intégré CI1 est nécessairement couplé galvaniquement au primaire).

Cependant, comme il faut bien assurer un démarrage de l'alimentation à découpage, on prévoit que la borne d'alimentation 28 du circuit intégré CI1 est aussi reliée directement au secteur par l'intermédiaire d'une résistance élevée 30 et d'une diode 32 ; ceci est possible puisque le circuit intégré CI1 est relié à la masse primaire ; ce n'est pas possible pour le circuit CI2 qui doit rester galvaniquement isolé du secteur. Dès que l'alimentation à découpage fonctionne normalement, la tension continue stabilisée issue de l'enroulement ES3 et de la diode 24 prend le par sur la tension issue du secteur et de la diode 32 ; cette diode 32 se bloque et l'alimentation directe par le secteur n'intervient plus après la phase de démarrage initial.

On va maintenant préciser le rôle des circuits intégrés CI1 et CI2.

Le circuit de régulation CI2 reçoit d'un pont diviseur 34, placé aux bornes du condensateur 22, c'est-à-dire en sortie de l'alimentation stabilisée, une information sur la valeur de la tension à stabiliser Vs.

Cette information est comparée à une valeur de consigne et appliquée à un modulateur de largeur d'impulsions qui établit des créneaux périodiques de largeur variable en fonction de la valeur de la tension de sortie Vs ; plus Vs est faible plus la largeur des créneaux sera grande.

Les créneaux sont établis à la fréquence de découpage de l'alimentation à découpage. Cette fréquence est donc établie du côté du secondaire du circuit ; elle est engendrée soit à l'intérieur du circuit CI2, soit à l'extérieur dans un circuit non représenté, sous forme d'une tension en dent de scie à la fréquence de découpage choisie. Cette tension en dent de scie est utilisée de manière connue pour effectuer la modulation de largeur.

Les créneaux de largeur variable, à la fréquence de découpage, sont appliqués à un enroulement primaire 36 d'un petit transformateur TX dont l'enroulement secondaire 38, isolé galvaniquement du primaire, fournit des impulsions positives et négatives aux fronts montants et descendants, respectivement, des créneaux de largeur variable.

Ce sont ces impulsions, de position et de fréquence déterminées par le circuit de régulation CI2, qui constituent des signaux de régulation appliqués à une entrée 40 du circuit de commande de base CI1.

Le transformateur TX est constitué par quelques spires de bobinage enroulées sur un bâtonnet de ferrite, les spires du primaire et les spires du secondaire étant suffisamment écartées les unes des autres pour respecter les normes d'isolation galvanique entre circuits primaires et circuits secondaires de l'alimentation à découpage.

Le circuit intégré de commande de base CI1 comporte diverses entrées pami lesquelles on a déjà mentionné une entrée d'alimentation 28 et une entrée de signaux de régulation 40 ; une entrée de mesure de courant 44 est reliée à la résistance de mesure de courant 18 ; une entrée d'inhibition permettant de surveiller l'état de magnétisation d'un transformateur. Enfin, des entrées peuvent être prévues pour connnecter les éléments (résistances, capacités) qui devraient faire partie du circuit intégré lui-même mais qui pour des raisons technologiques (encombrement) ou pour des raisons pratiques (possibilités de réglage par l'utilisateur) sont montés à l'extérieur.

Le circuit intégré CI1 comporte enfin une sortie 46 qui est destinée à être couplée par un couplage galvanique direct à la base du transistor de puissance $T_P$. Cette sortie fournit des créneaux de mise en conduction et de blocage du transistor $T_P$.

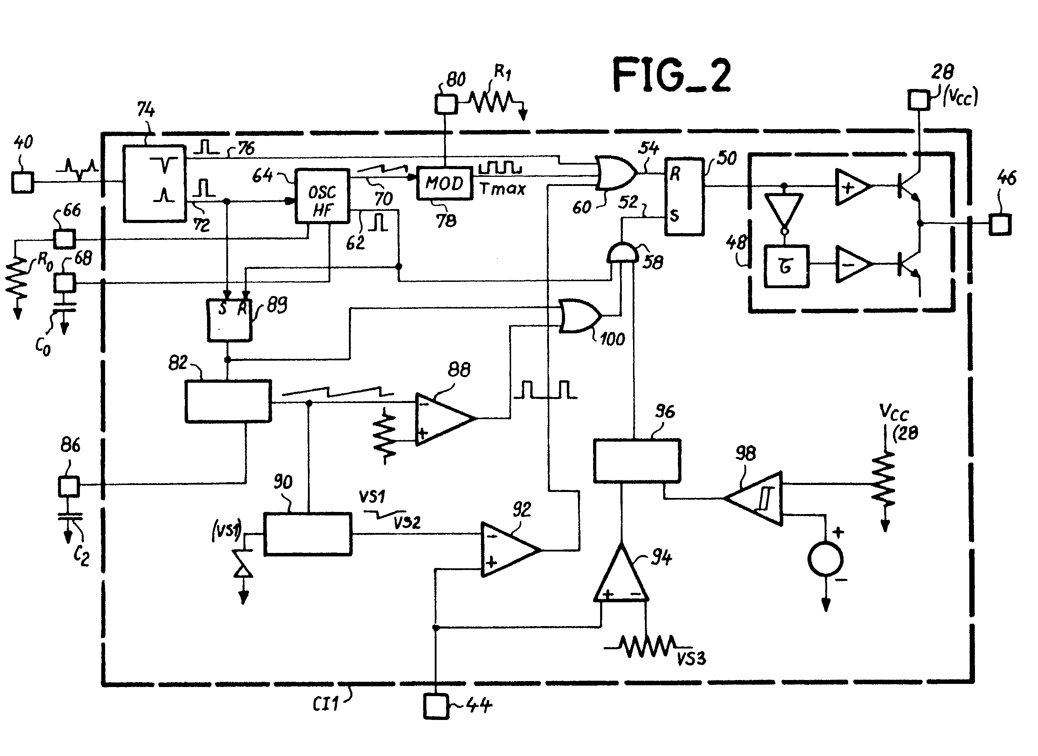

La figure 2 représente partiellement l'architecture générale du circuit intégré CI1.

La sortie 46 du circuit, destinée à la commande de base du transistor $T_P$, est la sortie d'un étage d'amplification push-pull globalement désigné par la référence 48, cet étage comprenant de préférence deux amplificateurs séparés dont l'un reçoit des créneaux de mise en conduction inversés et retardés de quelques microsecondes. De tels amplificateurs sont maintenant bien connus.

Les signaux de mise en conduction sont issus d'une bascule logique 50 ayant une entrée de basculement 52 et une entrée de rétablissement 54. L'entrée de basculement permet le déclenchement de la mise en conduction du transistor de puissance. L'entrée de rétablissement permet le déclenchement de l'arrêt de la conduction.

L'entrée de basculement 52 (S) reçoit les impulsions qui passent à travers une porte logique ET 58, de sorte que le déclenchement de la conduction ne se produit qui si plusieurs conditions sont simultanément satisfaites ; une condition non satisfaite suffira à inhiber le déclenchement de la conduction.

L'entrée de rétablissement 54 (R) reçoit les impulsions qui passent à travers une porte logique OU 60, de sorte que l'arrêt de la conduction (après un déclenchement de conduction) se produira dès lors qu'un signal d'arrêt se présentera sur l'une des entrées de cette porte.

Sur le schéma de la figure 2, la porte ET 58 a trois entrées. L'une de ces entrées reçoit des impulsions périodiques issues d'une sortie 62 d'un oscillateur à haute fréquence 64 ; les autres entrées servent à inhiber la transmission de ces impulsions.

L'oscillateur définit la périodicité du découpage de l'alimentation (20 kilohertz par exemple). En régime de fonctionnement normal l'oscillateur 64 est synchronisé par les signaux de régulation ; en régime de démarrage il est autooscillant à une fréquence libre définie par les valeurs d'une résistance Ro et d'une capacité $C_o$ extérieures au circuit intégré CI1 et respectivement connectées à une borne d'accès 66 et une borne d'accès 68. La fréquence libre fo est en principe légèrement plus faible que la fréquence de découpage normale.

L'oscillateur 64 est un oscillateur à relaxation qui produit sur une sortie 70 une dent de scie dont le retour à zéro est imposé par l'apparition d'une impulsion positive arrivant sur la borne 40. C'est pourquoi l'oscillateur 64 est représenté avec une entrée reliée à une sortie 72 d'un circuit de séparation et de mise en forme 74 qui reçoit les signaux de régulation de la borne 40 et les met en forme en séparant les impulsions positives des impulsions négatives. Le circuit de mise en forme 74 a deux sorties : 72 pour les impulsions positives, 76 pour les impulsions négatives (on gardera la notation impulsion positive, impulsion négative pour distinguer les impulsions de déclenchement de la conduction et les impulsions d'arrêt de la conduction même si le circuit de mise en forme établit des impulsions de même signe sur ses deux sorties 72 et 76).

L'oscillateur 64 a deux sorties : une sortie 70 fournissant une dent de scie et une sortie 62 fournissant une impulsion courte lors du retour à zéro de la dent de scie.

Un modulateur de largeur d'impulsions 78 est relié d'une part à la sortie 70 de l'oscillateur et d'autre part à une tension de référence ajustable par une résistance R1 extérieure au circuit intégré et reliée à une borne 80 d'accès au circuit. Le modulateur 78 fournit des créneaux périodiques synchronisés avec les signaux de l'oscillateur, ces créneaux définissant une durée maximale de conduction Tmax au delà de laquelle le blocage du transistor de puissance doit être déclenché de toute façon par sécurité. Ces créneaux de modulateur 78 sont appliqués à une entrée de la porte OU 60. La durée Tmax est réglable par la résistance extérieure R1.

Les éléments qui viennent d'être décrits assurent l'essentiel du fonctionnement en régime normal du circuit intégré CI1. Les éléments suivants sont plus spécifiquement prévus pour contrôler le fonctionnement anormal ou le démarrage de l'alimentation.

Un oscillateur à très basse fréquence 82 est relié à une capacité extérieure C2 par une borne d'accès 86. Cette capacité extérieure permet de régler la très basse fréquence d'oscillation. La fréquence peut être de 1 hertz par exemple.

L'oscillateur 82 est un oscillateur à relaxation fournissant une dent de scie. Cette dent de scie est appliquée d'une part à un comparateur à seuil 88 qui permet d'établir des créneaux périodiques synchronisés sur la dent de scie à très basse fréquence de l'oscillateur. Ces créneaux ont une durée brève devant la période de la dent de scie : cette durée est fixée par le seuil du comparateur 88 ; elle peut être par exemple de 10 % de la période ; elle doit être longue devant la période libre d'oscillation de l'oscillateur haute fréquence 64 de manière qu'une salve de nombreuses impulsions de l'oscillateur haute fréquence puisse être émise et utilisée pendant ces 10 % de la période à très basse fréquence ; cette salve définit une tentative de démarrage pendant la première partie d'un cycle de démarrage ; elle est suivie d'une pause pendant le reste de la période c'est-à-dire pendant les 90 % restants.

L'oscillateur 82 ne sert qu'au démarrage ; il est inhibé lorsque des signaux de régulation apparaissent sur la borne 40 et indiquent que l'alimentation à découpage fonctionne. C'est pourquoi on a représenté une commande d'inhibition de cet oscillateur, relié à la sortie 72 du circuit de mise en forme 74 par l'intermédiaire d'une bascule bistable 89. Cette bascule change d'état sous l'action des impulsions apparaissant sur la sortie 72. Elle est ramenée à son état initial par la sortie 62 de l'oscillateur 64 lorsqu'il n'y a plus d'impulsions sur la sortie 71.

Les dents de scie de l'oscillateur à très basse fréquence sont par ailleurs transmises à un circuit 90 d'élaboration de seuil variable qui a pour fonction d'établir un signal de seuil (courant ou tension) ayant une première valeur Vs1 en régime de fonctionnement normal, et un seuil cycliquement variable entre la première valeur et une deuxième valeur en régime de démarrage.

Le signal de seuil établi par le circuit 90 et appliqué à une entrée d'un comparateur 92 dont une autre entrée est reliée à la borne 44 déjà mentionnée, pour recevoir sur cette entrée un signal représentatif de l'amplitude du courant traversant le commutateur de puissance. La sortie du comparateur 92 est appliquée à une entrée de la porte OU 60. Elle agit donc pour déclencher le blocage du transistor de puissance $T_P$, après un déclenchement de conduction, le blocage se produisant dès la détection du dépassement du seuil (fixe ou variable) défini par le circuit 90.

Un autre comparateur à seuil 94 a une entrée reliée à la borne 44 de mesure de courant tandis qu'une autre entrée reçoit un signal représentant une troisième valeur de seuil Vs3. La troisième valeur Vs3 correspond à un courant dans le commutateur plus élevé que la première valeur Vs1 définie par le circuit 90. La sortie du comparateur 94 est reliée à travers une bascule de mémorisation 96 à une entrée de la porte ET 58 de sorte que si le courant dans le commutateur de puissance dépasse la troisième valeur de seuil Vs3, on ne déclenche pas un arrêt de la conduction du transistor $T_P$ (cet arrêt est déclenché par le comparateur 92) mais une inhibition de toute remise en conduction du transistor. Cette inhibition dure jusqu'à ce que la bascule 96 soit remise dans son état initial correspondant à un fonctionnement normal.

En principe ce rétablissement n'aura lieu que lorsque le circuit intégré CI1 aura cessé d'être alimenté normalement en énergie et sera à nouveau remis sous tension. Par exemple, le rétablissement de la bascule 96 se fait par l'intermédiaire d'un comparateur à seuil à hystérésis 98 qui compare une fraction de la tension d'alimentation Vcc du circuit (prélevée sur la borne 28) à une valeur de référence et qui rétablit la bascule lors du premier passage de Vcc au-dessus de cette référence après une chute de Vcc au-dessous d'une autre valeur de référence plus faible que la première (hystérésis).

Enfin, on peut préciser que la sortie de la bascule bistable 89 (qui détecte la présence de signaux de régulation sur la borne 40 donc le fonctionnement normal de l'alimentation), est reliée à une entrée d'une porte OU 100 qui reçoit sur une autre entrée la sortie du comparateur 88 pour que la sortie du comparateur 88 cesse d'inhiber la remise en conduction du transistor $T_P$ (inhibition pendant 90 % des cycles à très basse fréquence) dès que le fonctionnement de l'alimentation est devenu normal.

OBJET DE L'INVENTION

Ainsi, dans le dispositif précédemment fabriqué par la Demanderesse et décrit en détail ci-dessus, il est prévu des procédures particulières pour les phases de démarrage et des procédures particulières de protection en cas d'incident de fonctionnement.

Un dispositif similaire comprenant les caractéristiques du préambule de la revendication 1 est aussi divulgué dans ELECTRONIC COMPONENTS AND APPLICATIONS, vol. 2, no. 1, novembre 1979, pages 31-48, Eindhoven, NL; H.HOUKES: "TDA 1060- a comprehensive integrated control circuit for SMPS". Ce dispositif prévoit deux comparateurs de courant, dont le premier agit sur l'entrée de remise à zéro. Le dépassement du deuxième sail de courant provoque un arrêt momentané de l'alimentation suivi d'une procédure de démarrage.

La présente invention vise à améliorer encore la sécurité de fonctionnement en détectant des défauts de fonctionnement sur un plus long terme que cela était effectué dans le circuit antérieur. Bien que l'invention présente un apport nouveau et distinct par rapport au procédé de l'art antérieur, le dispositif antérieur a été décrit de façon extrêmement détaillé ci-dessus pour bien faire comprendre les nombreuses contraintes qui se posent lors de la réalisation d'un nouveau dispositif de sécurité qui doit tenir compte de tous les types de fonctionnement possibles prévus dans un circuit préexistant sans introduire de défauts ou de blocages dans le fonctionnement normal du circuit dans ses différents modes. Ainsi, tout nouvel apport à une structure complexe telle que celle décrite précédemment nécessite d'effectuer de nombreux choix et de très nombreux tatonnements entre diverses solutions qui pourraient paraître a priori comme simples.

Ainsi, la présente invention prévoit un dispositif de protection contre des surcharges prolongées dans des alimentations à découpage comprenant un commutateur principal commandé par des signaux de sortie d'une première bascule dont les entrées de mise à 1 et de remise à zéro reçoivent des signaux de commande de régulation, un premier circuit de protection fournissant sur l'entrée de remise à zéro des signaux prioritaires par rapport aux signaux de régulation quand l'intensité dans le commutateur principal dépasse un seuil prédéterminé, comportant en outre un deuxième circuit de protection comprenant lui-même :

- un moyen de détection des cycles pour lesquels le premier circuit de protection entre en action et interrompt la conduction du commutateur principal avant la survenance de l'ordre de coupure du signal de régulation,
- un moyen de mémorisation accumulant à chaque cycle une valeur proportionnelle à la durée entre un signal du moyen de détection indiquant l'arrivée d'une surcharge dans un de ces cycles et le signal de mise à 1 lié au signal de régulation du cycle suivant, et
- des moyens d'inhibition pour inhiber l'entrée de mise à 1 de la première bascule quand le moyen de mémorisation a accumulé un signal supérieur à un seuil prédéterminé.

Selon un mode de réalisation de la présente invention, le moyen de détection comprend une deuxième bascule, une troisième bascule et une porte ET,

- la deuxième bascule recevant à son entrée de remise à zéro la sortie de mise en route du signal de régulation, l'entrée de mise à 1 de cette bascule recevant la sortie de la porte ET et la sortie de cette bascule commandant le moyen de mémorisation,
- la troisième bascule ayant son entrée de mise à 1 reliée à l'entrée de remise à zéro de la deuxième bascule, son entrée de remise à zéro reliée au signal de remise à zéro du signal de régulation, et sa sortie connectée à une première entrée de la porte ET,
- la deuxième entrée de la porte ET étant reliée à la sortie du premier circuit de protection.

Selon un mode de réalisation de la présente invention, le moyen de mémorisation comprend un condensateur déchargé en permanence par un moyen de décharge et chargé de façon temporaire par un moyen de charge seulement quand le circuit de détection fournit un signal.

Selon un mode de réalisation de la présente invention, les moyens d'inhibition comprennent un comparateur comparant le signal accumulé par le moyen de mémorisation à une valeur de référence, le signal de sortie de ce comparateur inhibant l'entrée de mise à 1 de la première bascule quand le signal mémorisé devient supérieur à une valeur de référence.

Ces objets, caractéristiques et avantages ainsi que d'autres de la présente invention seront exposés plus en détail dans la description suivante d'un mode de réalisation détaillé faite en relation avec les figures jointes parmi lesquelles :

les figures 1 et 2 illustrent une alimentation de découpage de l'art antérieur et ont été décrites précédemment ;

la figure 3 est une représentation simplifiée d'un circuit de protection contre les surcharges d'une alimentation à découpage de l'art antérieur ;

la figure 4 illustre le circuit de protection contre des surcharges de durée prolongée selon la présente invention pour des alimentation à découpage ; et

la figure 5 est un chronogramme destiné à illustrer le fonctionnement des circuits des figures 3 et 4.

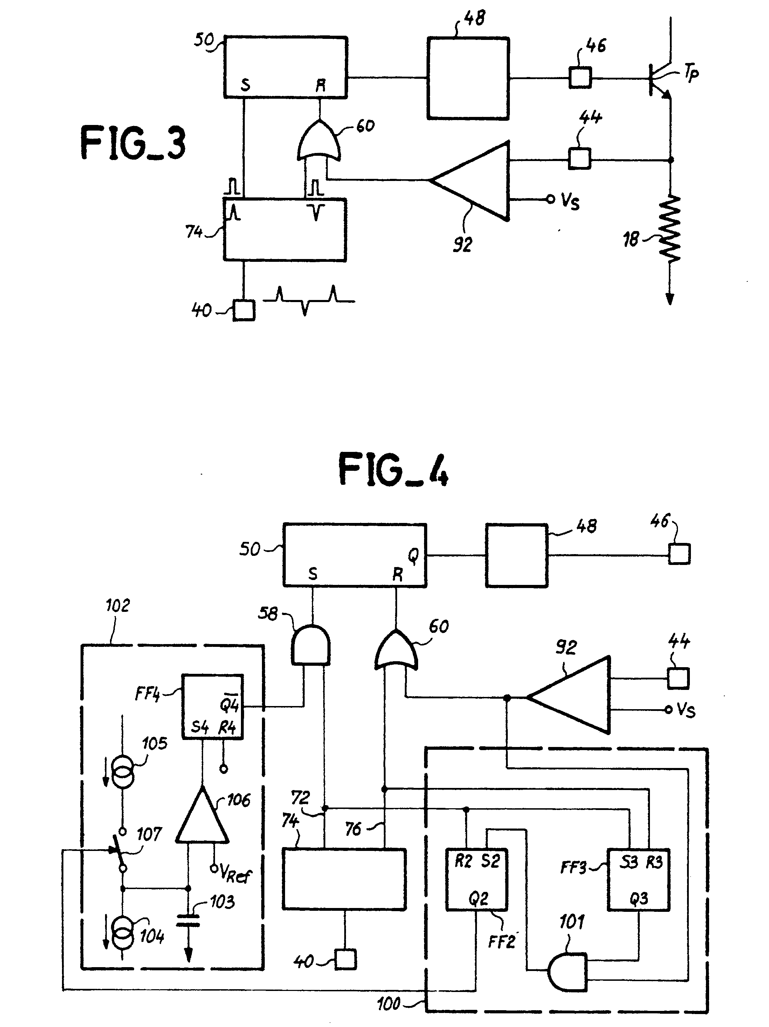

La figure 3 reprend de façon simplifiée les composants essentiels du circuit de la figure 2 constituant un circuit de protection contre les surintensités dans le transistor principal $T_P$. La conduction dans le transistor $T_P$ est normalement commandée par un signal accessible sur une borne 40, résultant d'un circuit de modulation de largeur d'impulsions, qui commande une bascule 50 par l'intermédiaire d'un circuit de mise en forme 74. La bascule 50 actionne la base du transistor de puissance $T_P$ par l'intermédiaire d'un circuit de préamplification 48 et d'une borne d'accès 46. Quand le courant dans le transistor de puissance dépasse un seuil donné, la tension aux bornes d'une résistance 18 accessible à la borne 44 est comparée à une tension de seuil $V_s$ par un comparateur 92 et, si cette tension dépasse le seuil, l'entrée de remise à zéro R de la bascule 50 est actionnée par l'intermédiaire d'une porte OU 60 dont l'autre entrée reçoit un signal de sortie de circuit de mise en forme 74.

Ce dispositif de protection protège efficacement le commutateur $T_P$ contre une surcharge en courant mais ne permet pas toujours une bonne protection de l'alimentation, par exemple en cas de surcharge prolongée. En effet, on n'est pas à l'abri d'un échauffement excessif du transformateur TA ou des diodes de redressement 20 (voir figure 1) ou d'autres composants du circuit connectés au secondaire du transformateur principal et l'on est généralement amené à surdimensionner ces composants pour tenir compte de surcharges prolongées qui pourraient se produire par suite, par exemple de courts-circuits au secondaire.

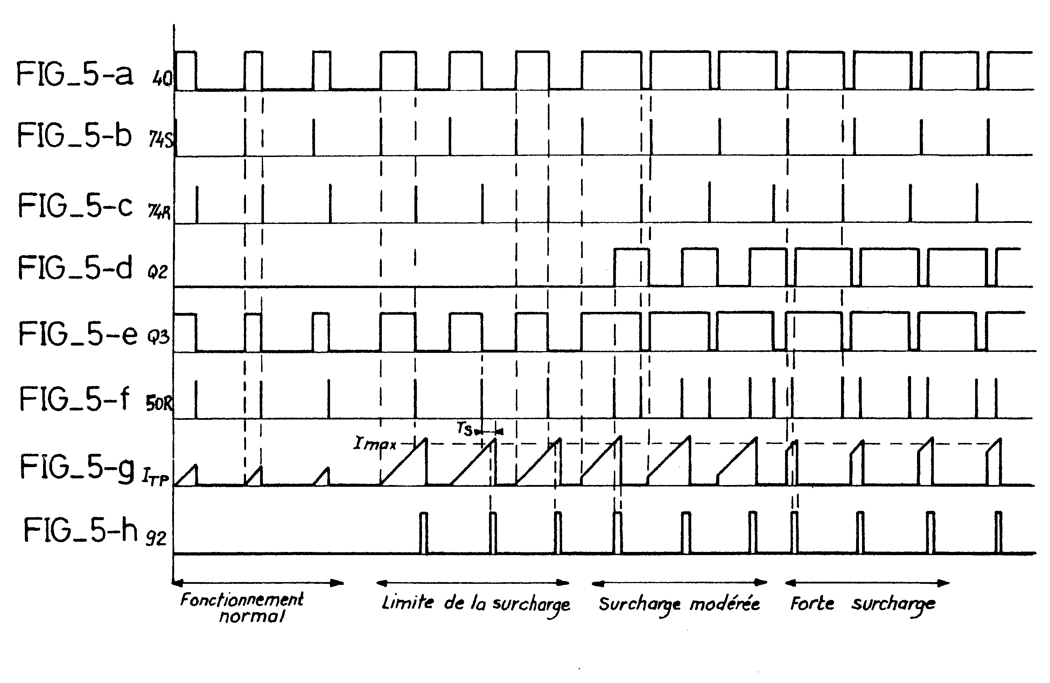

L'invention qui sera décrite ci-après en relation avec les figures 4 et 5 concerne un dispositif qui, adjoint au circuit classique de limitation de courant décrit précédemment, entraîne l'arrêt total et définitif de l'alimentation en cas de fonctionnement prolongé dudit système de limitation de courant. On évite ainsi le surdimensionnement coûteux de certains composants et on augmente globalement la sécurité de fonctionnement de l'alimentation.

Le redémarrage de l'alimentation peut être obtenu par la mise hors tension momentanée de l'ensemble du système ou au moins du dispositif concerné.

Comme le représente la figure 4, la présente invention comprend un circuit 100 de détection du fonctionnement du circuit de surcharge, comprenant des bascules FF2 et FF3 et une porte ET 101, et un circuit 102 de mémorisation et d'inhibition de l'alimentation à découpage. Le circuit 102 agit sur la bascule de commande du courant de base 50 décrite précédemment par l'intermédiaire d'une porte ET 58.

Le circuit de mémorisation et d'inhibition 102 comprend un condensateur 103, un système de décharge constitué d'une source de courant 104 fonctionnant en permanence, un système de charge de ce condensateur constitué d'une source de courant 105 commandée en tout ou rien par un commutateur 107 recevant la sortie du circuit de détection 100. Lorsque le circuit de détection 100 indique que le circuit de limitation de courant dans le commutateur principal $T_P$ ne fonctionne pas, seul le système de décharge 104 fonctionne et le condensateur 103 reste déchargé. Lorsque le système de limitation de courant 100 est sollicité, le système de charge (source de courant 105) est activé. Le rapport entre le courant de décharge et le courant de charge est choisi de façon que globalement le condensateur se charge. Lorsque la tension aux bornes du condensateur atteint une valeur déterminée, fixée par un comparateur 106, une bascule FF4 est déclenchée ce qui interdit définitivement la mise en conduction du commutateur $T_P$.

Dans le circuit 100 de détection du fonctionnement du circuit de limitation de courant, la bascule FF2 a son entrée de remise à zéro (R2) connectée à la sortie 72 du circuit de mise en forme 74, son entrée de mise à 1 (S2) connectée à la sortie de la porte ET 101 et sa sortie (Q2) connectée à la borne de commande du commutateur 107 du circuit 102. La deuxième bascule FF3 a son entrée de mise à 1 (S3) connectée à la sortie 72 du circuit de mise en forme 74, son entrée de remise à zéro (R3) connectée à la sortie 76 de ce circuit de mise en forme et sa sortie (Q3) connectée à une première entrée de la porte ET 101 dont l'autre entrée est connectée à la sortie du comparateur 92 détectant les surintensités dans le transistor de puissance $T_P$.

La figure 5 indique un chronogramme des signaux apparaissant en différents points du circuit dans quatre cas de fonctionnement particuliers. En figure 5 :

la ligne a indique les signaux présents à la borne 40 ou plus exactement les signaux de commande dont résultent les signaux à la borne 40 par suite de l'action du transformateur d'isolement TX (voir figure 1). Il s'agit de créneaux plus ou moins longs selon le signal d'erreur détecté ;

la ligne b indique le signal présent à la sortie 72 du circuit de mise en forme 74, provoquant normalement la mise à 1 de la bascule 50 ;

la ligne c indique le signal à la sortie 76 du circuit de mise en forme 74, commandant normalement la remise à zéro de la bascule 50 ;

la ligne d indique le signal à la sortie Q2 de la bascule FF2 commandant le commutateur 107 ;

la ligne e indique le signal Q3 à la sortie de la bascule FF3 ;

la ligne f indique le signal à l'entrée R de la bascule 50, c'est-à-dire le signal à la sortie de la porte OU 60. Ce signal correspond à l'impulsion de front montant à la sortie 76 du circuit de mise en forme 74 ou à la sortie du comparateur 92 ;

la ligne g indique le courant dans le transistor de puissance qui correspond au signal présent à l'entrée 44 du comparateur 92 ;

la ligne h indique le signal à la sortie du comparateur 92.

On va maintenant étudier le fonctionnement de ce circuit dans quatre modes possibles de fonctionnement.

### 1. Fonctionnement normal sans surcharge.

Aucun signal n'est fourni à la sortie du comparateur 92 et ce sont les sorties 72 et 76 (signaux des lignes b et c) qui commandent les entrées S et R de la bascule 50. Le circuit 102 ne recevant aucun signal de sortie du circuit 100 fournit à la sortie Q4 de la bascule FF4 un signal à haut niveau et la porte ET 58 est validée ce qui permet bien aux signaux 72 de sortie du circuit de mise en forme 74 d'atteindre l'entrée S de la bascule 50.

### 2. Fonctionnement en limite inférieure de surcharge.

Comme le montre la ligne g de la figure 5, il s'agit du cas où l'impulsion de remise à zéro de la bascule 50 tend à couper le commutateur $T_P$ avant qu'une détection de surcharge (courant dans $T_P$ supérieur à I max) ne survienne, mais où une surcharge se produit entre l'ordre de coupure et la coupure effective du transistor de puissance. Ce retard est dû au temps de blocage ou temps de stockage $t_s$ du commutateur qui n'est pas nul en particulier dans le cas où l'on utilise un transistor bipolaire haute tension. Le comparateur de limitation de courant 92 est alors actionné. Toutefois, le signal de sortie du comparateur 92 n'atteint pas la bascule FF2 pour fournir au signal de sortie Q2 puisque la bascule FF3 a été remise à zéro antérieurement par le signal 76 et bloque la porte ET 101. La bascule FF2 reste donc à zéro et comme dans le cas précédent, le circuit 102 n'est pas actionné et le circuit de régulation continue à fonctionner normalement. Il serait en effet fâcheux d'interrompre le fonctionnement de l'alimentation à découpage dans ce cas particulier.

### 3. Fonctionnement en surcharge modérée.

Comme dans les cas précédents, c'est le signal 72 de sortie du circuit de mise en forme 74 qui entraîne la mise en conduction du transistor principal mais, comme le montre la ligne g, on atteint le niveau de surcharge du commutateur $T_P$ avant que le signal normal de coupure du transistor (ligne c) ne survienne. En ce cas, le comparateur 92 fournit un signal qui est transmis par l'intermédiaire de la porte ET 101 validé par la bascule FF3 à la bascule Q2 qui est mise à 1. Le commutateur 107 du circuit de mémorisation et d'inhibition 102 est alors fermé et le processus de charge du condensateur 103 commence.

On notera que le signal Q2 (ligne d) reste à haut niveau jusqu'à l'impulsion de déclenchement du cycle suivant (passage de la sortie 72 à haut niveau). Donc plus la surcharge est arrivée tôt dans le cycle plus le signal Q2 est présent pendant une longue durée. Au bout de quelques cycles de fonctionnement, la tension accumulée sur le condensateur 103 sera supérieure à la tension de référence VRef appliquée à la deuxième borne du comparateur 106. Alors la bascule FF4 fournit un signal à bas niveau à sa sortie Q4 et la porte ET 58 invalide l'entrée S de la bascule 50. Ceci se produit seulement si la surcharge dure pendant un certain nombre de cycles. Alors, le fonctionnement de l'alimentation à découpage est définitivement coupé indiquant un défaut de fonctionnement du dispositif, par exemple une mise en court-circuit d'un secondaire du transformateur TA (voir figure 1). Pour remettre en route l'alimentation à découpage, il faut appliquer un nouveau signal à l'entrée R4 de la bascule FF4. Cette entrée peut par exemple être reliée à un dispositif d'initialisation à la mise sous tension de l'ensemble de l'alimentation à découpage.

### 4. Fonctionnement en forte surcharge

Ce fonctionnement est illustré à la partie droite de la figure 5. Il est globalement identique au cas d'une surcharge modérée mais a été représenté seulement pour montrer l'allongement des impulsions Q2 quand la surcharge se présente très tôt dans un cycle de fonctionnement de l'alimentation à découpage.

On voit donc apparaître les divers avantages du circuit selon l'invention. D'une part, le délai d'action est facilement programmable à l'aide d'un seul composant, par exemple la valeur de la capacité du condensateur 103. D'autre part, automatiquement, en raison de l'allongement de l'impulsion Q2 quand la surcharge se produit tôt dans un cycle, le délai d'action est modulé en fonction de l'intensité de la surcharge. Ainsi, plus la surcharge est forte plus le délai d'action est court.

Un autre avantage réside dans la parfaite simultanéité du déclenchement de la temporisation du dispositif selon l'invention et du fonctionnement de la limitation classique du courant décrit dans l'exposé de l'art antérieur. Il en résulte une très bonne sécurité de fonctionnement. On évite le risque de déclenchements intempestifs du dispositif au voisinage inférieur de la limite de courant.

D'autre part, comme on l'a vu, le dispositif selon l'invention fonctionne bien avec un commutateur principal constitué d'un transistor bipolaire dans lequel le temps de stockage est relativement long, mais ce circuit est parfaitement adaptable à un commutateur dont le délai de blocage tend vers zéro tel qu'un transistor MOS de puissance.

Enfin, selon un autre avantage de l'invention, ce circuit est parfaitement compatible avec les autres circuits de protection et d'assistance au démarrage utilisés dans des circuits de l'art antérieur. En effet, on a noté que les composants du circuit selon l'invention sont parfaitement compatibles avec les composants du circuit de limitation de courant décrit précédemment. En outre, la porte ET 58 qui permet de bloquer le circuit quand il n'est pas en fonctionnement porte la même référence que la porte ET 58 décrite en relation avec la figure 2. En effet, il peut s'agir de la même porte comprenant simplement une entrée supplémentaire. C'est là un autre avantage de l'invention à savoir qu'il est parfaitement compatible avec le circuit à démarrage automatique décrit en relation avec les figures 1 et 2. Dans ce mode de démarrage automatique, qu'on peut également appeler mode salve, on souhaite également pouvoir détecter et stopper l'alimentation en cas de surcharge. Toutefois, comme cela a été exposé précédemment, dans le mode salve initial, le circuit fonctionne seulement avec un rapport cyclique de l'ordre de 10 %. En ce cas, le condensateur 103 risque de se charger insuffisamment pendant ce bref temps d'action et de se décharger pendant les 90 % de non fonctionnement. Pour remédier à cela, il est prévu selon la présente invention d'inhiber la décharge du condensateur 103 en prévoyant un interrupteur commandé (non représenté) en série avec la source de courant de décharge 104 et actionné par un signal indicatif du fait que l'on se trouve en mode salve. Ainsi, en cas de surcharge dans le mode salve, le condensateur se charge un peu à chaque salve et conserve sa tension entre les salves. Il est donc possible d'atteindre la tension VRef au bout d'un certain nombre de salves.

**Revendications**

1. Dispositif de protection contre des surcharges prolongées dans des alimentations à découpage comprenant un commutateur principal ($T_P$) commandé par des signaux de sortie d'une première bascule (50) dont les entrées de mise à 1 (S) et de remise à zéro (R) reçoivent des signaux de commande de régulation, un premier circuit de protection (60, 92) fournissant sur l'entrée de remise à zéro (R) des signaux prioritaires par rapport aux signaux de régulation quand l'intensité dans le commutateur principal ($T_P$) dépasse un seuil prédéterminé, caractérisé en ce qu'il comprend en outre un deuxième circuit de protection comprenant lui-même :
   - un moyen de détection (100) des cycles pour lesquels le premier circuit de protection entre en action et interrompt la conduction du commutateur principal ($T_P$) avant la survenance de l'ordre de coupure du signal de régulation,
   - un moyen de mémorisation (102) accumulant à chaque cycle une valeur proportionnelle à la durée entre un signal du moyen de détection indiquant l'arrivée d'une surcharge dans un de ces cycles et le signal de mise à 1 lié au signal de régulation du cycle suivant, et
   - des moyens d'inhibition (58) pour inhiber l'entrée de mise à 1 de la première bascule (50) quand le moyen de mémorisation (102) a accumulé un signal supérieur à un seuil prédéterminé (VRef).

2. Dispositif selon la revendication 1, caractérisé en ce que le moyen de détection (100) comprend une deuxième bascule (FF2), une troisième bascule (FF3) et une porte ET (101),
   - la deuxième bascule (FF2) recevant à son entrée de remise à zéro (R2) la sortie de mise en route du signal de régulation, l'entrée de mise à 1 (S2) de la bascule (FF2) recevant la sortie de la porte ET (101) et la sortie (Q2) de la bascule (FF2) commandant le moyen de mémorisation (102),
   - la troisième bascule (FF3) ayant son entrée de mise à 1 (S3) reliée à l'entrée de remise à zéro (R2) de la deuxième bascule (FF2), son entrée de remise à zéro (R3) reliée au signal de remise à zéro du signal de régulation, et sa sortie (Q3) connectée à une première entrée de la porte ET (101),

- la deuxième entrée de la porte ET (101) étant reliée à la sortie du premier circuit de protection (92).

3. Dispositif de protection selon l'une des revendications 1 ou 2, caractérisé en ce que le moyen de mémorisation comprend un condensateur (103) déchargé en permanence par un moyen de décharge (104) et chargé de façon temporaire par un moyen de charge (105) seulement quand le circuit de détection (100) fournit un signal.

4. Dispositif de protection selon l'une quelconque des revendications 1 à 3, caractérisé en ce que les moyens d'inhibition comprennent un comparateur (106) comparant le signal accumulé par le moyen de mémorisation (103) à une valeur de référence (Vref), le signal de sortie de ce comparateur inhibant l'entrée de mise à 1 (S) de la première bascule (50) quand le signal mémorisé devient supérieur à une valeur de référence (VRef).

5. Dispositif de protection selon la revendication 4, caractérisé en ce que la sortie du comparateur (106) est reliée à l'entrée de mise à 1 (S4) d'une quatrième bascule (FF4) dont la sortie ($\overline{Q4}$) est connectée à l'entrée de mise à 1 (S) de la première bascule (50) par l'intermédiaire d'une porte ET (58) dont l'autre entrée reçoit le signal (72) de déclenchement du signal de régulation.

6. Dispositif de protection selon la revendication 3, caractérisé en ce que les moyens de charge et de décharge sont des sources de courant (105, 104) et en ce que la source de courant de charge (105) est reliée au condensateur (103) par l'intermédiaire d'un interrupteur commandé (107) actionné par la sortie (Q2) de la deuxième bascule (FF2) du moyen de détection.

7. Dispositif de protection selon la revendication 5, caractérisé en ce que la porte ET (58) connectée à l'entrée de validation de la première bascule (50) reçoit d'autres signaux d'inhibition provenant d'autres circuits de l'alimentation à découpage, tels que des circuits de commande automatique de démarrage.

## Claims

1. A device for protection against long duration overloading in switch mode power supplies comprising a main switch (Tp) controlled by output signals from a first flip-flop (50), the set (S) and reset (R) inputs of which receive regulation control signals, a first protection circuit (60, 92) supplying on the reset (R) input priority signals with respect to the regulation signals when the current in the main switch (Tp) exceeds a predetermined threshold, characterized in this that it further comprises a second protection circuit, itself comprising:

- means (100) for detecting cycles for which the first protection circuit is active and interrupts the on state for the main switch (Tp) prior to the arrival of the order for the off state of the regulation signal;
- memorization means (102) accumulating at each cycle a value proportional to the duration between a signal from the detection means indicating the occurrence of an overloading in one of said cycles and the set signal associated with the regulation signal of the following cycle; and
- inhibition means (58) for inhibiting the set input of the first flip-flop (50) when the memorization means (102) have accumulated a signal higher than a predetermined threshold (VRef).

2. A device according to claim 1, characterized in this that the detection means (100) comprise a second flip-flop (FF2), a third flip-flop (FF3) and an AND gate (101):

- the second flip-flop (FF2) receiving at its reset input (R2) the starting output of the regulation signal, the set input (S2) of this flip-flop (FF2) receiving the output of the AND gate (101) and the output (Q2) of this flip-flop (FF2) controlling the memorization means (102),
- the third flip-flop (FF3) having its set input (S3) connected to the reset input (R2) of the second flip-flop (FF2), its reset input (R3) connected to the reset signal of the regulation signal, and its output (Q3) connected to a first input of the AND gate (101),
- the second input of the AND gate (101) being connected to the output of the first protection circuit (92).

3. A device for protection according to claim 1 or 2, characterized in this that the memorization means comprise a capacitor (103) permanently discharged by a discharging means (104) and temporarily charged by a charging means (105) only when the detection means (100) supplies a signal.

4. A device for protection according to any of claims 1 to 3, characterized in this that the inhibition means comprise a comparator (106) comparing the signal accumulated by the memorization means (103) with a reference value (VRef), the output signal of this comparator inhibiting the set input of the first flip-flop (50) when the memorized signal becomes higher than a reference value (VRef).

5. A device for protection according to claim 4, characterized in this that the output of the comparator (106) is connected to the set input of a fourth flip-flop (FF4), the output ($\overline{Q}4$) of which is connected to the set input (S) of the first flip-flop (50) through an AND gate (58), the other input of which receives the signal (72) for triggering the regulation signal.

6. A device for protection according to claim 3, characterized in this that the charge and discharge means are current sources (105, 104) and the charge current source (105) is connected to the capacitor (103) through a controlled switch (107) actuated by the output (Q2) of the second flip-flop (FF2) of the detection means.

7. A device for protection according to claim 5, characterized in this that the AND gate (58) connected to the enable input of the first flip-flop (50) receives other inhibition signals issuing from other circuits of the switch mode supply, such as automatic starting control circuits.

## Patentansprüche

1. Schutzschaltung für eine Zerhackerspeisung gegen langdauernde Überlastung, mit einem Hauptschalter (Tp), der von Ausgangssignalen einer ersten Kippschaltung (50) angesteuert wird, deren Setz- und Rücksetzeingänge (S, R) Befehlssteuersignale empfangen, mit einer ersten Schutzschaltung (60, 92), die an den Rücksetzeingang (R) Prioritätssignale im Hinblick auf Steuersignale liefert, wenn die Stromstärke in dem Hauptschalter (Tp) eine vorbestimmte Schwelle überschreitet, dadurch gekennzeichnet, daß die Schaltung darüberhinaus eine zweite Schutzschaltung aufweist, die ihrerseits aufweist:
    - eine Detektionseinrichtung (100) zum Detektieren von Zyklen, bei denen die erste Schutzschaltung in Aktion tritt und den Hauptschalter (Tp) zum Abschalten öffnet, bevor ein Abschaltbefehl des Steuersignals auftritt,
    - eine Speichereinrichtung (102), die bei jedem Zyklus einen Wert aufspeichert, der proportional der Dauer zwischen einem das Auftreten einer Überlastung in einem der Zyklen anzeigenden Signal der Detektionseinrichtung und dem an das Steuersignal des folgenden Zyklus gebundenen Setzsignal ist, und
    - Sperreinrichtungen (58), um das Setzen der ersten Kippschaltung (50) zu verhindern, wenn in der Speichereinrichtung (102) ein Signal größer als eine vorbestimmte Schwelle (VRef) akkumuliert ist.

2. Schaltung nach Anspruch 1, dadurch gekennzeichnet, daß die Detektionseinrichtung (100) eine zweite Kippschaltung (FF2), eine dritte Kippschaltung (FF3) und ein UND-Gatter (101) aufweist,
    - wobei die zweite Kippschaltung (FF2) an ihrem Rücksetzeingang (R2) das Startsignal des Steuersignals und der Setzeingang (S2) der Kippschaltung (F2) das Ausgangssignal des UND-Gatters (101) empfängt und das Ausgangssignal (Q2) der Kippschaltung (FF2) die Speichereinrichtung (102) steuert,
    - wobei der Setzeingang (S3) der dritten Kippschaltung (FF3) mit dem Rücksetzeingang (R2) der zweiten Kippschaltung (FF2) verbunden, der Rücksetzeingang (R3) der dritten Kippschaltung mit dem Rücksetzsignal des Steuersignals belegt und der Ausgang (Q3) mit einem ersten Eingang des UND-Gatters (101) verbunden ist und
    - wobei der zweite Eingang des UND-Gatters (101) mit dem Ausgang der ersten Schutzschaltung (92) verbunden ist.

3. Schutzschaltung nach einem der Ansprüche 1 oder 2, dadurch gekennzeichnet, daß die Speichereinrichtung einen Kondensator (103) aufweist, der ständig durch eine Entladeschaltung (104) entladen und temporär durch eine Ladeschaltung (105) nur dann aufgeladen wird, wenn die Detektionseinrichtung (100) ein Signal abgibt.

4. Schutzschaltung nach einem der Ansprüche 1 bis 3, dadurch gekennzeichnet, daß die Sperreinrichtung einen Komparator (106) aufweist, der das durch die Speichereinrichtung (102) akkumulierte Signal mit einem Referenzwert (VRef) vergleicht, und daß das Ausgangssignal dieses Komparators den Setzeingang (S) der ersten Kippschaltung (50) sperrt, wenn das gespeicherte Signal größer als ein Referenzwert (VRef) wird.

5. Schutzschaltung nach Anspruch 4, dadurch gekennzeichnet, daß der Ausgang des Komparators (106) mit dem Setzeingang (S4) einer vierten Kippschaltung (FF4) verbunden ist, deren Ausgang ($\overline{Q}4$) mit dem Setzeingang (S) der ersten Kippschaltung (50) über ein UND-Gatter (58) verbunden ist, dessen zweiter Eingang das Auslösesignal (72) für das Steuersignal empfängt.

6. Schutzschaltung nach Anspruch 3, dadurch gekennzeichnet, daß die Ladeschaltung und die Entladeschaltung Stromquellen (105, 104) sind, und daß die Ladestromquelle (105) mit dem Kondensator (103) über einen Steuerschalter (107) verbunden ist, der durch das Ausgangssignal (Q2) der zweiten Kippschaltung (FF2) der Detektionseinrichtung betätigt wird.

7. Schutzschaltung nach Anspruch 5, dadurch gekennzeichnet, daß das mit dem Freigabeeingang der ersten Kippschaltung (50) verbundene UND-Gatter (58) weitere Sperrsignale empfängt, die von anderen, eine Schaltfunktion zur Verfügung stellenden Schaltungen stammen, so z.B. von Schaltungen für einen automatischen Startbefehl.

**FIG_1**

EP 0 240 434 B1

# FIG_2

EP 0 240 434 B1

# FIG_3

# FIG_4

14

FIG_5-a 40

FIG_5-b 74S

FIG_5-c 74R

FIG_5-d Q2

FIG_5-e Q3

FIG_5-f 50R

FIG_5-g $I_{TP}$

FIG_5-h 92

$Impx$   $T_S$

Fonctionnement normal   Limite de la surcharge   Surcharge modérée   Forte surcharge